# EUROPÄISCHE PATENTSCHRIFT

(11) **EP 0 838 070 B1**
(45) Veröffentlichungstag und Bekanntmachung des Hinweises auf die Patenterteilung: **07.01.1999**
(21) Anmeldenummer: 96923863.3
(22) Anmeldetag: 12.07.1996
(51) Int. Cl.: G07C 5/00, G07B 15/00, B60R 13/10, G08G 1/017

(54) **FAHRZEUGKENNZEICHEN**
VEHICLE IDENTIFICATION SYSTEM
IDENTIFICATION D'UN VEHICULE

(30) Priorität: 12.07.1995 DE 19526815
(43) Veröffentlichungstag der Anmeldung: 29.04.1998
(73) Patentinhaber: SIEMENS AKTIENGESELLSCHAFT, 80333 München (DE)
(72) Erfinder: HAGEMEYER, Friedrich-Wilhelm, D-12249 Berlin (DE)
(86) Internationale Anmeldenummer: DE9601310
(87) Internationale Veröffentlichungsnummer: WO9703419

(56) Entgegenhaltungen:
- EP-A- 0 648 653
- DE-A- 3 839 959
- DE-A- 4 220 963
- DE-A- 4 425 530
- FR-A- 2 619 944
- GB-A- 2 154 832
- US-A- 4 001 822
- US-A- 5 311 197

## Beschreibung

Die Erfindung liegt auf dem Gebiet der Ortung und Auffindung von Fahrzeugen in Gefahren- oder Notsituationen.

Die DE 44 16 813 A1 beschreibt eine Vorrichtung mit in einem Fahrzeug verteilten und mit diesem starr verbundenen Mitteln zur kontinuierlichen Registrierung von Stoßvorgängen, mit einer Auswerteeinrichtung und mit einer Kommunikationsvorrichtung, die eine Zentrale unterrichtet, falls die registrierten Stoßvorgänge in ihrer Intensität oder Dauer vorgebbare Schwellwerte überschreiten.

Aus der DE 37 29 941 A1 geht ein Überwachungssystem für Fahrzeuge hervor. Das System ist mit einem Sender und einem Empfänger ausgestattet und umfaßt ein peripheres Modul und dient zur Datenübertragung oder Anzeige.

Aus verschiedenen Veröffentlichungen (IEEE SPECTRUM DEC. 1993, Seiten 36 - 47; "Global Positioning System", Funkschau 11/1993, Seiten 74 ff.; ntz Bd. 44 (1991) Heft 9, Seiten 639 ff.; "Elektronische Pfadfinder", c't 1992, Heft 6, Seiten 40 ff.) sind ursprünglich zu militärischen Zwecken entwickelte Systeme und Einrichtungen zur Positionsbestimmung oder Ortung von Objekten bekannt. Das satellitengestützte "Global Positioning System" (GPS) basiert auf der Laufzeitbestimmung von Hochfrequenzsignalen, die einzelne Satelliten bekannter Position aussenden. Empfangseinrichtungen dieser Positionsbestimmungssysteme werden zunehmend in Land- oder Wasserfahrzeugen installiert. Sie dienen dazu, eine korrekte Navigation oder ein genaues Erreichen eines Zieles zu gewährleisten. Im Ergebnis werden dem Fahrzeugführer bedarfsweise der aktuelle Aufenthaltsort, die aktuelle Geschwindigkeit oder weitere daraus ableitbare Navigationsdaten zur Verfügung gestellt.

Die DE 38 39 959 A1 beschreibt eine Notrufeinrichtung für ein Fahrzeug mit einem Notfunkgerat und einem Singnalgeber, die in einer Gefahrensituation einen automatischen Notruf aussendet. Dazu ist in dem Fahrzeug ein Ortungs- oder Navigationsgerät vorgesehen, das beim Ansprechen des Signalgebers den Notruf mit Ortungsdaten versieht, die die aktuelle Fahrzeugposition angeben.

Aus der EP 0 648 653 A1 geht eine Anordnung zur manipulationsgeschützten Identifikation eines Fahrzeugs hervor, das mit einem mit einer Dateneingabevorrichtung verbundenen Bordcomputer versehen ist. Ferner ist wenigstens ein mit Anzeigeelementen versehenes elektronisches Kennzeichen vorgesehen, das seinerseits ein elektronisches Speicherelement mit mehreren fahrzeugspezifischen Identifikationsdaten beinhaltet. Durch Vergleich der speicherelementseitigen Daten mit den in dem Bordcomputer gespeicherten fahrzeugspezifischen Daten ist die Fahrzeugidentität verifizierbar.

Demgegenüber besteht die Aufgabe der vorliegenden Erfindung in der Schaffung einer Einrichtung zum bedarfsweisen Ermitteln des aktuellen Aufenthaltsorts eines Fahrzeuges in Sonder- oder Notsituationen, während sich das Fahrzeug im Normalfall in Eigenverantwortung des Fahrzeugführers ohne übergeordnete Kontrolle bewegen läßt. Die Einrichtung soll ohne Änderung des Fahrzeugdesigns oder der Fahrzeugkonstruktion leicht nachrüstbar sein.

Diese Aufgabe wird erfindungsgemäß durch ein Fahrzeugkennzeichen gelöst, das als integrale Bestandteile
a) eine Selbstortungseinheit, die die aktuelle Position des Fahrzeugs ermittelt,
b) einen aktivierbaren Sender, der bedarfsweise mit einer Fahrzeugkennung versehene Positionsinformationen über den aktuellen Aufenthaltsort des Fahrzeugs an ein globales Kommunikationssystem sendet, und
c) eine Aktivierungseinheit, die nur bei Ansteuerung durch ein fahrzeugspezifisches Aktivierungssignal den Sender aktiviert, umfaßt. Ein wesentlicher Vorteil der Erfindung besteht darin, daß das Kennzeichen im Austausch gegen ein bisheriges Kennzeichen ohne weitergehende fahrzeugseitige Veränderungen leicht nachrüstbar ist. Es gewährleistet mit einfachen Mitteln eine Notruffahigkeit sowie eine Diebstahl- und Fälschungssicherheit. Durch Gesetze oder Verordnungen ist die Einführung des Fahrzeugkennzeichens leicht durchsetzbar und überprüfbar. Die Selbstortungseinheit kann vorteilhafterweise zusätzlich zur Navigation dienen. Dazu kann das Fahrzeugkennzeichen mit einer Schnittstelle versehen sein, über die die Positionsdaten der Selbstortungseinheit abgreifbar sind, ohne daß das Fahrzeugkennzeichen manipulierbar ist. Das Fahrzeugkennzeichen kann bevorzugt als an sich bekanntes Kraftfahrzeugnummernschild ausgebildet sein. Da die Selbstortungseinheit, der aktivierbare Sender und die Aktivierungseinheit integrale Bestandteile des Fahrzeugkennzeichens sind, kann dieses vollständig gekapselt sein, so daß Manipulationen der einzelnen Komponenten zerstörungsfrei nicht möglich sind.

Moderne Fahrzeuge werden zunehmend mit Einrichtungen zum Schutz der Insassen bei einem Unfall ausgerüstet; so hat beispielsweise der sogenannte Airbag eine weite Verbreitung gefunden. Diese Einrichtungen werden nur bei einem Unfall wirksam und stellen damit bereits einen Sensor für einen Notfall dar. Eine vorteilhafte Weiterbildung der Erfindung sieht diesbezüglich vor, daß eine bei einem Unfall wirksam werdende Insassenschutzeinrichtung des Fahrzeugs die Aktivierungseinheit ansteuert und daß der Sender mit den Positionsinformationen ein Notrufsignal sendet. So können bei einem Unfall sofort die Unfallposition lokalisiert und demgemäß geeignete Hilfsmaßnahmen veranlaßt und koordiniert werden.

Zu einer gezielten Ortung des Fahrzeugs in einem Sonder- oder Notfall ist nach einer vorteilhaften Ausgestaltung der Erfindung vorgesehen, daß das Fahrzeugkennzeichen als integralen Bestandteil weiterhin umfaßt:
d) einen Empfänger, der über einen Sender im Nahbereich oder über das globale Kommunikationssystem ansprechbar ist und der bei Empfang eines Freigabesignals die Aktivierungseinheit ansteuert. Dadurch wird in vorteilhafter Weise selektiv nur dann das Fahrzeug geortet, wenn dafür ein besonderer Anlaß besteht; ansonsten werden die Ortungsfunktionen nur lokal im Fahrzeug ausgenutzt, so daß keine Datenschutzprobleme entstehen.

Der Fahndungs- bzw. Sucherfolg nach einem Fahrzeug kann insbesondere in Bereichen mit einer hohen Verkehrsdichte dadurch wesentlich verbessert werden, daß das Fahrzeugkennzeichen als integralen Bestandteil weiterhin umfaßt:
e) ein elektronisch lesbares Identitatskennzeichen. Auch hier besteht eine unter Datenschutzgesichtspunkten besonders vorteilhafte Ausgestaltung der Erfindung darin, daß das Identitatskennzeichen nur nach vorherigem Empfang des Freigabesignals lesbar oder abfragbar ist.

Ein Ausführungsbeispiel der Erfindung wird nachfolgend anhand einer Zeichnung näher erläutert, es zeigen:
Figur 1 anhand eines Blockschaltbildes den Aufbau eines Fahrzeugkennzeichens und
Figur 2 schematisch einen Schnitt durch ein Fahrzeugkennzeichen.

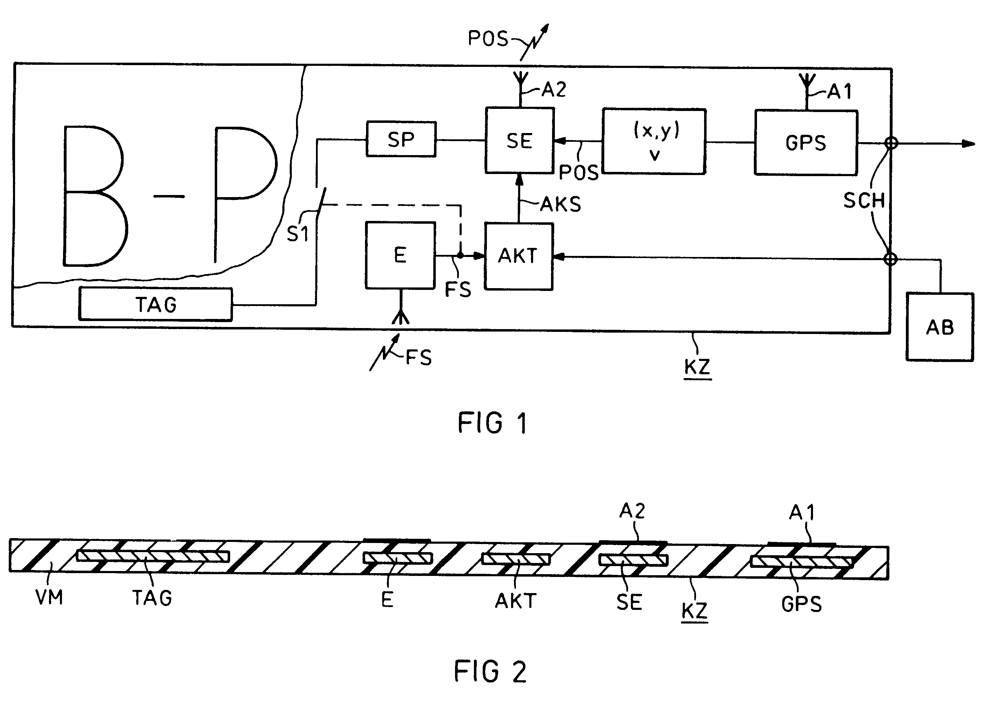

Gemäß Figur 1 umfaßt ein Kraftfahrzeugkennzeichen KZ als integrale Bestandteile eine Selbstortungseinheit GPS, einen aktivierbaren Sender SE und eine Aktivierungseinheit AKT. Die Selbstortungseinheit bestimmt aus von Satelliten über eine Antenne A1 empfangenen Hochfrequenzsignalen in an sich bekannter Weise Daten, die die aktuelle Position (x, y) und bedarfsweise weitere Bewegungsparameter (z. B. die Geschwindigkeit v) des Kennzeichens KZ und damit des mit ihm fest verbundenen Fahrzeugs repräsentieren. Der aktivierbare Sender SE sendet in nachfolgend erläuterter Weise Positionsinformationen POS über die Position (x, y) des Fahrzeugs über eine Antenne A2 an ein an sich bekanntes, nicht näher dargestelltes globales Kommunikationssystem (GSM / "Global System for Mobile Communication"). Die Aktivierungseinheit AE ist mit einem Empfänger E verbunden, der über das globale Kommunikationssystem GSM ansprechbar ist. Alternativ oder zusätzlich ist der Empfänger E über einen Sender im Nahbereich ansprechbar. Bei Empfang eines Freigabesignals FS von dem Kommunikationssystem steuert der Empfänger E die Aktivierungseinheit AKT derart an, daß diese ihrerseits ein Aktivierungssignal AKS an den Sender SE abgibt. Der Sender SE sendet deshalb nur bei Aktivierung die Positionsinformationen POS aus, die mit einem spezifischen Identifizierungssignal des Kraftfahrzeugs verknüpft sind. Das Identifizierungssignal kann zusammen mit weiteren detaillierten Angaben über das Fahrzeug (beispielsweise Geschwindigkeitsbeschränkungen, Steuerklasse) in einem Festwertspeicher SP abgelegt sein.

Die Aktivierungseinheit AKT ist außerdem über eine Schnittstelle SCH mit der Steuerung einer an sich bekannten Insassenschutzeinrichtung (Airbag) AB verbunden. Beim unfallbedingten Aufprall des Fahrzeugs löst ein Sensor der Insassenschutzeinrichtung AB die Wirksamkeit der Einrichtung aus, (z. B. Entfalten des Airbag). Das Sensorsignal wird über die Schnittstelle SCH auch der Aktivierungseinheit zugeführt, die ihrerseits daraufhin das Aktivierungssignal AKS generiert. In diesem Fall sendet der Sender bevorzugt zusammen mit der Positionsinformation POS auch ein im Speicher SP abgelegtes Notrufsignal. Durch dieses über das globale Kommunikationssystem übertragene Notrufsignal und in Kenntnis der aktuellen Position des verunglückten Fahrzeugs können sofort die notwendigen ortsspezifischen Hilfsmaßnahmen eingeleitet werden.

Das Kraftfahrzeugkennzeichen KZ umfaßt weiterhin als integralen Bestandteil ein elektronisch lesbares Identitatskennzeichen TAG. Dieses kann als Oberflachenwellenleiter ausgebildet und aufgrund seiner Oberflächenstruktur in bekannter Weise Informationen über die Identität und spezielle Merkmale des Kennzeichens oder des Fahrzeugs gespeichert haben; alternativ kann das Identitatskennzeichen TAG auch auf den Speicher SP zugreifen. Das Identitatskennzeichen TAG kann als passives Antwortgerät ausgebildet sein, das bei Empfang eines Nachfragesignals die Nachfragesignaleenergie zur Generierung und Aussendung eines entsprechenden Antwortsignals verwertet. Wie durch einen symbolischen Schalter S1 angedeutet, ist das Identitatskennzeichen TAG nur lesbar oder abfragbar, wenn zuvor das Freigabesignal FS von dem Empfänger E empfangen und weitergeleitet worden ist. Dadurch ist sichergestellt, daß das Identitatskennzeichen nur in speziellen Situationen auslesbar, ansonsten aber der Datenschutz gewährleistet ist.

Vorzugsweise ist das Freigabesignal nur von dem Fahrzeughalter oder Fahrzeugverantwortlichen aussendbar. Dazu kann der Fahrzeughalter beispielsweise über einen entsprechenden Code (elektronischer Schlüssel) verfügen, den er über das globale Kommunikationssystem oder einen Nahbereichssender an den Empfänger E senden kann.

Figur 2 zeigt einen Querschnitt, aus dem hervorgeht, daß die wesentlichen Komponenten - insbesondere die Selbstortungseinheit GPS, der aktivierbare Sender SE und die Aktivierungseinheit AKT zusammen mit dem Empfänger E - in eine Vergußmasse VM eingebettet und damit beschädigungsfrei nicht von dem als übliches Nummernschild ausgebildeten Kennzeichen KZ trennbar sind. Die Komponenten des Kennzeichens sind auch über die Schnittstelle SCH nicht manipulierbar, weil über diese lediglich das Signal der Insassenschutzeinrichtung AB zuführbar und die Positionsdaten der Selbstortungseinheit GPS abgreifbar sind. Das Kraftfahrzeugkennzeichen KZ kann durch die extrem klein zu bauenden Komponenten im wesentlichen mit identischen Abmessungen bisheriger Kennzeichen ausgeführt werden, so daß eine Umrüstung bestehender Wagenparks problemlos und einfach möglich und durchsetzbar ist.

## Patentansprüche

1. Fahrzeugkennzeichen, das als integrale Bestandteile umfaßt:
a) eine Selbstortungseinheit (GPS), die die aktuelle Position (x, y) des Fahrzeugs ermittelt,
b) einen aktivierbaren Sender (SE), der bedarfsweise mit einer Fahrzeugkennung versehene Positionsinformationen (POS) über den aktuellen Aufenthaltsort (x, y) des Fahrzeugs an ein globales Kommunikationssystem sendet, und
c) eine Aktivierungseinheit (AKT), die nur bei Ansteuerung durch ein fahrzeugspezifisches Aktivierungssignal (AKT) den Sender (SE) aktiviert.

2. Fahrzeugkennzeichen nach Anspruch 1,
**dadurch gekennzeichnet, daß** eine bei einem Unfall wirksam werdende Insassenschutzeinrichtung (AB) des Fahrzeugs die Aktivierungseinheit (AKT) ansteuert und daß der Sender (SE) mit den Positionsinformationen (POS) ein Notrufsignal sendet.

3. Fahrzeugkennzeichen nach Anspruch 1 oder 2,
**dadurch gekennzeichnet, daß** das Fahrzeugkennzeichen als integralen Bestandteil weiterhin umfaßt:
d) einen Empfänger (E), der über einen Sender im Nahbereich oder über das globale Kommunikationssystem ansprechbar ist und der bei Empfang eines Freigabesignals (FS) die Aktivierungseinheit (AKT) ansteuert.

4. Fahrzeugkennzeichen nach einem der vorangehenden Ansprüche,
**dadurch gekennzeichnet, daß** das Fahrzeugkennzeichen als integralen Bestandteil weiterhin umfaßt:
e) ein elektronisch lesbares Identitätskennzeichen (TAG).

5. Fahrzeugkennzeichen nach Anspruch 4,
**dadurch gekennzeichnet, daß** das Identitatskennzeichen (TAG) nur nach vorherigem Empfang des Freigabesignals (FS) lesbar oder abfragbar ist.

## Claims

1. A vehicle number plate comprising the following integral components:
a) a self-locating unit (GPS) which determines the current position (x, y) of the vehicle,
b) an activatable transmitter (SE) which when required transmits position data (POS), relating to the current position (x, y) of the vehicle and provided with a vehicle identification, to a global communications system and
c) an activation unit (AKT) which activates the transmitter (SE) only when triggered by a vehicle-specific activation signal (AKS).

2. A vehicle number plate according to Claim 1,
characterised in that an occupant-protection device (AB) of the vehicle, which becomes operative in the event of an accident, triggers the activation unit (AKT) and that the transmitter (SE) transmits an emergency call signal with the position data (POS).

3. A vehicle number plate according to Claim 1 or 2, characterised in that the vehicle also comprises the following integral component:
d) a receiver (E) which can be addressed via a close-range transmitter or via the global communications system and which triggers the activation unit (AKT) upon the reception of a release signal (FS).

4. A vehicle number plate according to one of the preceding claims, characterised in that the vehicle number plate also comprises the following integral component:
e) an electronically readable identity tag (TAG).

5. A vehicle number plate according to Claim 4,
characterised in that the identity tag (TAG) can be read or interrogated only following the previous reception of the release signal (FS).

## Revendications

1. Système de caractérisation de véhicule qui comprend comme partie intégrante:
a) une unité (GPS) d'autolocalisation, qui détermine la position (x,y) actuelle du véhicule,
b) un émetteur (SE) qui peut être activé et qui émet des informations (POS) de position munies au besoin d'une caractérisation du véhicule, concernant le lieu (x,y) de séjour du moment du véhicule, à destination d'un système de communication global, et
c) une unité (AKT) d'activation, qui n'active l'émetteur (SE) qu'en cas de commande par un signal (AKT) d'activation spécifique au véhicule.

2. Système de caractérisation de véhicule suivant la revendication 1,
caractérisé en ce qu'un dispositif (AB) de protection des passagers du véhicule, qui devient actif en cas d'accident, commande l'unité (AKT) d'activation et en ce que l'émetteur (SE) émet un signal d'appel de détresse avec les informations de position.

3. Système de caractérisation de véhicule suivant la revendication 1 ou 2,
caractérisé en ce que le système de caractérisation de véhicule comprend comme partie intégrante de plus:
d) un récepteur (E) qui peut être déclenché par l'intermédiaire d'un émetteur dans la zone de proximité ou par l'intermédiaire du système de communication global et qui, à réception d'un signal (FS) de libération, commande l'unité (AKT) d'activation.

4. Système de caractérisation de véhicule suivant l'une des revendications précédentes,
caractérisé en ce que le système de caractérisation de véhicule comprend comme partie intégrante de plus:
e) une caractérisation (TAG) d'identité pouvant être lue de manière électronique.

5. Système de caractérisation de véhicule suivant la revendication 4,
caractérisé en ce que la caractérisation (TAG) d'identité ne peut être lue ou interrogée qu'après réception préalable du signal (FS) de libération.
